# EUROPEAN PATENT APPLICATION

(11) **EP 1 223 120 A2**
(43) Date of publication of application: **17.07.2002**
(21) Application number: 02000403.2
(22) Date of filing: 07.01.2002
(51) Int. Cl.: B65G 23/32

(54) **Conveyor device and conveyor system**

(30) Priority: 15.01.2001 JP 2001005878; 22.02.2001 JP 2001045929
(71) Applicant: Murata Kikai Kabushiki Kaisha, Minami-ku, Kyoto-shi, Kyoto 601 (JP)
(72) Inventor: Masuda, Junichi, Niwa-gun, Aichi (JP)
(74) Representative: Liedl, Christine

(57) **Abstract**

The present invention relates to a conveyor device (31,32,33) and a conveyor system (1), wherein the conveyor device comprises a front roller (6), an end roller (6), an endless belt (35) passing round the front and end rollers and at least one intermediate roller (6) provided at shorter intervals than the longitudinal length of products between the front and end rollers, and said front and end rollers and said intermediate roller are drive rollers.

## Description

### Field of the Invention

The present invention relates to a conveyor device and a conveyor system.

### Background of the Invention

The conventional art in this kind of conveyor device and conveyor system has a front roller, an end roller, an endless belt passing round the front roller and the end roller, and a belt support plate provided in between a front roller and an end roller, which is publicly known.

The said conventional conveyor system has the defect that slight loosing of the endless belt cannot make products conveyed smoothly since the endless belt is driven by pressing the endless belt passing round the front roller and the end roller against the drive roller (either the front roller or the end roller). Additionally, the strength of the endless belt and the front and end rollers must be pretty high since the endless belt has to be passed round the front and end rollers in high tense, so that it also has the defect that the cost becomes high.

### Summary of the Invention

The present invention adopts the following means for solving the aforementioned defects:
1. The first aspect of the present invention comprises a front roller, an end roller, an endless belt passing round the front and end rollers and at least one intermediate roller provided at shorter intervals than the longitudinal length of products between the front and end rollers, and said front and end rollers and said intermediate roller are provided as the drive roller.
2. The second aspect of the present invention comprises the conveyor system having at least two conveyor devices described in the first aspect of the present invention, provided as being arranged in line to the longitudinal direction, wherein these conveyor devices can be driven and stopped separately and individually.
3. The third aspect of the present invention is described in the second aspect of the present invention, wherein a transmission roller is provided to be freely contacted with the roller below it in said conveyor device and the driven wheel rotating along with the transmission roller, arranged in being rotated by the endless drive belt passing oyer the longitudinal direction of the conveyor device line, is provided below them.
4. The forth aspect of the present invention is described in the third aspect of the present invention, wherein said transmission roller is provided to be freely rotatable such that the axis is heading for the right and left direction in the bearing being freely swingable upward and downward through the pivot heading the axis for the longitudinal direction to the bracket and said driven wheel is arranged to be rotated by the outward route of the endless drive belt.
5. The fifth aspect of the present invention is described in the forth aspect of the present invention, wherein a support member supporting the outward route of the endless drive belt is provided such as to located below the driven wheel in above bearing.
6. The sixth aspect of the present invention is described in the fifth aspect of the present invention, wherein the support part supporting the inward route of the endless drive belt is provided in above bracket.
7. The seventh aspect of the present invention is described in the forth aspect of the present invention, wherein the transmission roller and the driving roller are located in one side of above bearing and an actuator swinging the bearing is located in the other side of the bearing.

The present invention as described above demonstrates the following advantages:
1. According to the first aspect of the present invention, the endless belt is sandwiched in between the product and the roller, and the rotation of the roller is surely transmitted to the endless belt even if the endless belt is not contacted with the front and end rollers by strong power differently from the conventional art, in other words even if the endless belt is not strained strongly, so that products can be surely conveyed. Moreover, since the endless belt is unnecessary for being contacted with the front and end rollers by strong power, the strength of the endless belt and the front and end rollers can be weaker than the conventional one and the cost can be reduced.
2. According to the second aspect of the present invention, since the conveyor device can be driven and stopped separately and individually, in case that a product exists in front of it, the trailing product can be stopped in order not to bump it, that is to say that the device can be suitably utilized as the zero-pressure conveyor.
3. According to the third and forth aspects of the present invention, the cost can be reduced as there is no need to provide numerous drive sources such as motor etc..
4. According to the fifth aspect of the present invention, as provided the support member supporting the outward route of the endless drive belt such as not to be apart from the driven wheel in the bearing, the outward route of the endless drive belt is not constantly apart from the driven wheel despite of the swinging position of the bearing (the transmission roller), so that the driven wheel can be surely rotated.
5. According to the sixth aspect of the present invention, since the bracket has the support member supporting the inward route of the endless drive belt, the installation of the support member supporting the inward route of the endless drive belt is completed as long as this bracket is installed in the main body of the conveyor, so that there is no need to install the support member separately and the assembly efficiency can be improved.
6. According to the seventh aspect of the present invention, the system can be compacted.

### Brief Description of the Drawings

Figure 1 is a simplified side view abbreviated an intermediate part, showing preferred embodiments of the present invention.

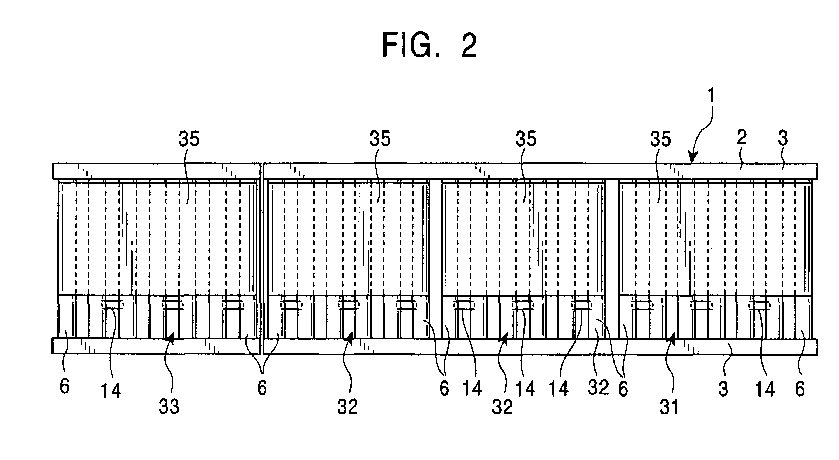

Figure 2 is a plain view of Figure 1.
Figure 3 is an expanded sectional view abbreviated the intermediate part, taken on line III-III of Figure 1.
Figrue 4 is a sectional view taken substantially along the lines IV-IV of Figure 3.

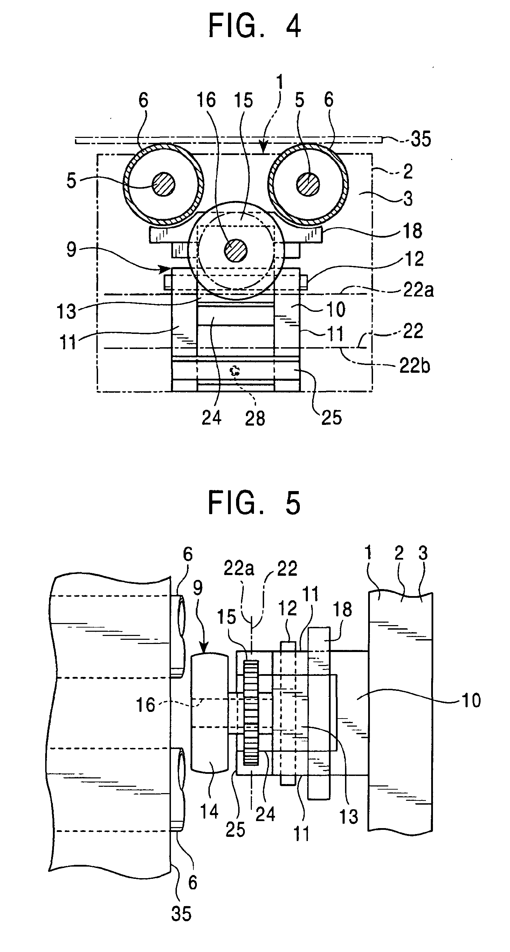

Figure 5 is a sectional view taken substatilally along the lines V-V of Figure 3.

### Detailed Description of the Preferred Embodiments

Hereinafter, preferred embodiments of the present invention will be described.

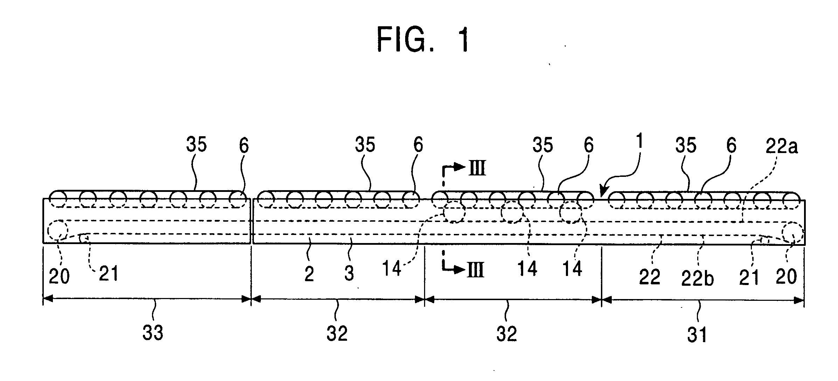

In this explanation, front means the right side and end means the left side in Figure 1, and left means the backside of the space and right means the front side of the space in Figure 1.

A conveyor system 1 has a front conveyor device 31, at least one intermediate conveyor device 32 and an end conveyor device 33. The front conveyor device 31, the intermediate conveyor device 32 and the end conveyor device 33 have a common machine frame 2, and this machine frame 2 has right and left side walls 3. Moreover, the longitudinal lengths of the front conveyor device 31 and the intermediate conveyor system 32 and the end conveyor device 33 are arranged to be longer than the longitudinal length of products.

First, the intermediate conveyor system 32 will be described in detail. The intermediate conveyor device 32 has required pieces of a roller shaft 5 (six pieces in this embodiment of the present invention) passing over to the right and left side walls 3 in the state that the axis is heading for the right and left directions at shorter intervals than the longitudinal length of products and a roller 6 fitted rotatably to these roller shafts 5.

The roller 6 in the front is the front roller and the roller 6 in the end is the end roller and other rollers 6 are the intermediate rollers, wherein an endless belt 35 is passed over the front roller 6 and the end roller 6. Additionally, an endless belt 35 is passed over the front and end rollers 6 such as not to cover the right end part of the rollers 6 in order that the after-mentioned transmission roller 14 and the endless belt 35 are not interfered with each other. Moreover, the upper-side part of the endless belt 35 (the conveyance part) is arranged to be contacted with the upper part of the intermediate rollers 6.

A transmission unit 9 is installed on the inner side surface of the right side wall 3 such as to be located below the rollers 6 between the odd roller 6 and the even roller 6 in the backward counted from the front.

The transmission unit 9 has a bracket 10 having a pair of overhangs 11 back and forth along with being installed on the inner side surface of the side wall 3, a bearing 13 arranged to be freely swingable upward and downward (right and left) through a pivot 12 heading the axis for the longitudinal direction to the overhang 11 of the bracket 10, a transmission roller 14 being contacted or not with the rollers 6 provided being freely rotatable such as to head the axis for the right and left directions to the bearing 13 from the below and a driven wheel 15 rotating along with the transmission roller 14.

The transmission roller 14 and the driven wheel 15 are united and fitted into a support shaft 16 provided in the left side in a protrusion manner such as to head the axis for the right and left directions to the bearing 13.

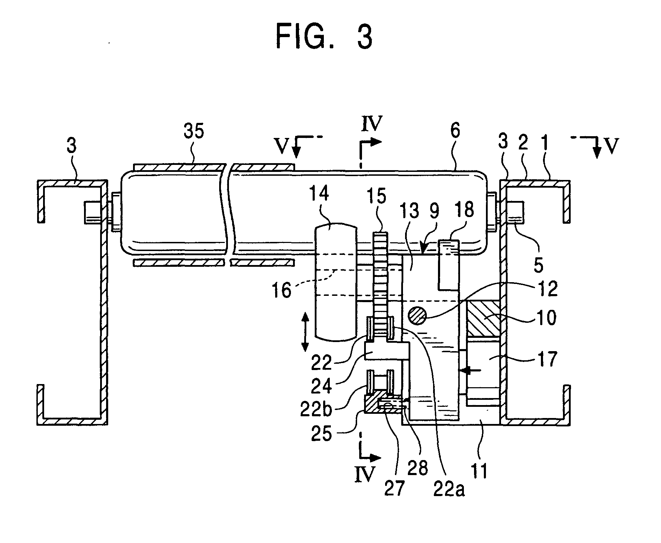

An actuator 17 (referring Figure 3) making the bearing 13 swung, arranged to be located in the right of the lower part of the bearing 13, is installed on the inner side surface of the right side wall 3. This structure makes the transmission roller 14 and the driven wheel 15 located in one side of the bearing 13 and also-makes the actuator 17 located in the other side of the bearing 13.

A brake shoe 18 is provided to the right side of a pivot 12 in the upper part of the bearing 13.

By the structure like this, as the transmission roller 14 is contacted with the roller 6 by swinging the transmission roller 14 side upward, the transmission roller 14, constantly rotated counterclockwise in Figure 1 as described later, can rotate the rollers 6 clockwise. On the other hand, the structure can make the rollers 6 not rotated by getting the transmission roller 14 off the roller 6 by swinging the transmission roller 14 side downward. Additionally, when the transmission roller 14 is apart from the roller 6 by swinging the transmission roller 14 side downward, the brake shoe 18 is arranged to be contacted with the roller 6 along with the movement.

The intermediate conveyor device 32 is arranged to be able to drive and stop separately and individually by the structure like this.

The front conveyor device 31 has the same structure as the intermediate conveyor device 32, except that the number of the rollers 6 is seven as illustrated in Figure 1. Additionally, the rest of six is rotated by the transmission unit 9, but the front roller 6 is not rotated by the transmission unit 9, so that the endless belt (not shown in the drawings) is passed over the front roller 6 and the second roller 6 from the front and the front roller 6 is arranged to be rotated in response to the rotation of the second roller from the front as the front roller 6 is not rotated by the transmission unit 9.

The end conveyor device 33 has the same structure as the intermediate conveyor device 32, except that the number of the rollers 6 is seven as illustrated in Figure 1. Additionally, the front six rollers are rotated by the transmission unit 9, but the end roller 6 is not rotated by the transmission unit 9, so that the endless belt (not shown in the drawings) is passed over the end roller 6 and the second roller 6 from the end and the end roller 6 is arranged to be rotated in response to the rotation of the second roller 6 from the end.

The front conveyor device 31 and the end conveyor device 33 are arranged to be able to drive and stop separately and individually, same as the intermediate conveyor device 32.

The conveyor system 1, applying the product sensor etc., can stop the trailing product such as not to bump it in case that a product exists in front of it, that is to say that it is suitably utilized as the zero-pressure conveyor by the structure like this.

A pair of wheels 20 back and forth heading the axis for the right and left directions is rotatably provided in the back and forth part of above right side wall 3, and either wheel 20 is regarded as the driven wheel rotated by the motor (not shown in the drawings). The endless drive belt 22 comprising the chain etc. is passed over above wheel 20 and an allowance wheel 21 back and forth. The upper side part of said endless drive belt 22 is regarded as an outward route 22a, and the lower side part is regarded as an inward route 22b. The outward route 22a is contacted with the driven wheel 15 by moving forward and is arranged to make the driven wheel 15 rotated counterclockwise in Figure 1.

A support member 24 supporting the outward route 22a of the endless drive belt 22 such as not to be apart from the driven wheel 15 is provided such as to be located below the driven wheel 15 in the bearing 13.

A support member 25 supporting the inward route 22b of the endless drive belt 22 is provided in the bracket 10 (more specifically, the overhang 11). A concave part 27 opening to the lower part of the bearing 13 is formed in the support member 25, and a spring 28 energizing the bearing 13 to the direction that the transmission roller 14 side swings downward is stored in this concave part 27. This spring 28 is provided for the brake shoes 18 being contacted with the roller 6 surely and firmly when the transmission roller 14 side is swung downward.

Next, the work in the preferred embodiment of the present invention will be described.

Since the endless belt 35 is sandwiched in between the products and the roller 6 which is driven when products are supplied to the conveyor system 1, the slip is not generated between the endless belt 35 and the rollers 6 and the rotation of the rollers 6 is surely transmitted to the endless belt 35 even if the endless belt 35 is not passed over the front and end rollers 6 in high tense, so that the products can be surely conveyed.

The variation will be explained as follows:
1. The tension device that is publicly known can be provided for applying the prescribed tension to the endless belt 35.
2. The number of the rollers 6 in the front conveyor device 31, the intermediate conveyor device 32 and the end conveyor device 33 is at least three, leaving to someone's option.
3. One transmission unit 9 can be provided in every one roller 6.
4. The drive means of the rollers 6 is optional.

## Claims

1. A conveyor device comprising a front roller, an end roller, an endless belt passing round the front and end rollers and at least one intermediate roller provided at shorter intervals than the longitudinal length of the products, wherein the front and end rollers and the intermediate roller are regarded as the drive roller.

2. A conveyor system provided at least two conveyor devices as claimed in claim 1 arranged in line to the longitudinal direction, can be driven and stopped separately and individually.

3. A conveyor system according to claim 2, wherein the transmission roller is provided to be freely contacted with the roller below it in above conveyor device and the driven wheel rotating along with the transmission roller, arranged in being rotated by the endless drive belt passing over the longitudinal direction of the conveyor device line, is provided below them.

4. A conveyor system according to claim 3, wherein said transmission roller is provided to be freely rotatable such that the axis is heading for the right and left direction in the bearing being freely swingable upward and downward through the pivot heading the axis for the longitudinal direction to the bracket and said driven wheel is arranged to be rotated by the outward route of the endless drive belt.

5. A conveyor system according to claim 4, wherein the support member supporting the outward route of the endless drive belt is provided such as to be located below the driven wheel.

6. A conveyor system according to claim 5, wherein the support member supporting the inward route of the endless belt part is provided in above bracket.

7. A conveyor system according to claim 6, wherein the transmission roller and the driven wheel are located in one side of above bearing and the actuator swinging the bearing is located in the other side of the bearing.
